# FASCICULE DE BREVET EUROPEEN

(11) **EP 4 499 433 B1**
(45) Date de publication et mention de la délivrance du brevet: **28.01.2026**
(21) Numéro de dépôt: 23709458.6
(22) Date de dépôt: 10.02.2023
(51) Int. Cl.: B60K 35/22, B60K 35/50, B60K 37/20

(54) **DISPOSITIF D'AFFICHAGE PROJETÉ POUR PLANCHE DE BORD DE VÉHICULE AUTOMOBILE**
PROJIZIERTE ANZEIGEVORRICHTUNG FÜR EIN ARMATURENBRETT EINES KRAFTFAHRZEUGS
PROJECTED DISPLAY DEVICE FOR A MOTOR VEHICLE DASHBOARD

(30) Priorité: 24.03.2022 FR 2202608
(43) Date de publication de la demande: 05.02.2025
(73) Titulaire: Stellantis Auto SAS, 78300 Poissy (FR)
(72) Inventeur: BOUVERET, Thomas, 92370 CHAVILLE (FR)
(74) Mandataire: ESIP
(86) Numéro de dépôt international: PCT/FR2023/050181
(87) Numéro de publication internationale: WO 2023/180639

(56) Documents cités:
- EP-A2- 2 594 987
- EP-B1- 0 891 887
- DE-A1- 102007 029 602
- FR-A1- 3 098 155
- JP-A- 2019 091 667

## Description

### Domaine technique

L'invention concerne le domaine de l'affichage d'informations sur une planche de bord de véhicule automobile. Plus particulièrement, l'invention concerne un combiné numérique destiné à l'affichage d'informations par projection directe sur la planche de bord et réflexion vers le conducteur du véhicule.

### Arrière-plan technologique

Dans les véhicules automobiles, les combinés d'instrumentation numériques ont tendance à remplacer les instruments de bord mécaniques qui se trouvent habituellement sur le tableau de bord devant le conducteur.

Ainsi, il existe aujourd'hui différents types de combinés numériques d'instrumentation assurant l'affichage direct ou indirect d'informations dans l'habitacle. Ces informations peuvent concerner les paramètres mécaniques du véhicule (régime moteur, vitesse, consommation...), mais peuvent également inclure les données cartographiques, GPS, météo, ....

Il existe aussi des combinés numériques comprenant un processeur graphique associé à un premier écran du type à cristaux liquides (LCD) ou TFT (« *Thin Film Transistor »)* monté sur la planche de bord en « arrière-plan » et d'un second écran formé généralement d'un élément réfléchissant recevant l'image projeté par le premier écran.

De manière générale, les éléments réfléchissant des combinés traditionnels sont constitués de lames de verre montées sur la planche de bord, sous le combiné de projection, au moyen d'organes de fixation spécifiques car l'espace disponible est réduit et les lames de verre sont fragiles.

Cependant, le profil de ces éléments de vitrage réfléchissant est généralement plat et ne s'harmonise pas toujours avec le style de la planche de bord dont le décor a tendance à devenir de plus en plus original et complexe.

En outre, les éléments de vitrage délimitent avec la face extérieure de la planche de bord un faible espace intercalaire où des poussières ont tendance à s'accumuler. Or, l'encrassement de cet espace très étroit pose des problèmes de nettoyage.

Le brevet FR3098155 décrit un dispositif d'affichage pour véhicule automobile comprenant un écran de projection, monté sur la planche de bord du véhicule, en vis à vis d'un élément réfléchissant avec un matériau polymère. En pratique, un tel dispositif est difficile à mettre en œuvre car il nécessite d'employer un polymère présentant toutes les qualités requises. En effet, la plupart des matériaux polymère, utilisables comme élément réfléchissant, présentent au moins un des défauts suivants : le matériau n'est pas suffisamment transparent quand l'écran est éteint, le matériau n'est pas suffisamment réfléchissant quand l'écran est allumé, le matériau n'est pas suffisamment résistant pour éviter une usure prématurée, le matériau n'est pas facile à appliquer de façon homogène pour éviter une déformation de l'image réfléchie.

### Résumé de l'invention

Un objet de la présente invention est de proposer une solution pour fournir un dispositif d'affichage avec un écran en vis-à-vis d'une surface réfléchissante d'une planche de bord qui soit à la fois facile à mettre en œuvre et qui présente des propriétés de réflexion et de transparence suffisante.

A cet effet, l'invention concerne un dispositif d'affichage pour véhicule automobile comprenant un processeur graphique couplé à au moins un écran de projection, monté sur la planche de bord du véhicule, en vis à vis d'un élément réfléchissant, ledit élément réfléchissant comprend un revêtement de la planche de bord caractérisé en ce que ledit revêtement comporte :
- Une couche de support,
- Une couche de matière,
- Une couche de vernis pour protéger la couche de matière, le vernis étant transparent de façon à laisser apparaitre la couche de matière, et
- La planche de bord comporte en outre une couche semi transparente destinée à, d'une part, réfléchir l'image émise par le au moins un écran et, d'autre part, laisser apparaitre la couche de matière, la couche semi-transparente est obtenue par flashage de chrome.

L'invention permet de mettre en œuvre un dispositif d'affichage par réflexion facilement dans un contexte automobile. Le revêtement multicouche est suffisamment transparent quand l'écran est éteint pour laisser visible la matière sur la planche de bord. Il est par ailleurs suffisamment réfléchissant quand l'écran est allumé pour permettre un affichage satisfaisant des images réfléchies. En outre, le revêtement est suffisamment résistant pour éviter une usure prématurée. Le revêtement est facilement applicable de façon homogène, ce qui permet d'éviter une déformation de l'image réfléchie.

Avantageusement, ledit revêtement comporte en outre une couche vernis transparent anti-trace de doigt (205) destinée à éviter les traces de doigts sur la planche de bord.

Avantageusement, le dispositif d'affichage pour véhicule automobile comprend en outre un deuxième écran de projection monté sur la planche de bord du véhicule, en vis à vis de l'élément réfléchissant, le au moins un écran de projection étant monté en vis-à-vis d'une première partie de planche de bord, le deuxième écran de projection étant monté en vis-à-vis d'une deuxième partie de planche de bord distincte de la première partie de planche de bord.

Cette caractéristique permet de bénéficier d'un affichage distinct pour un passager. Avantageusement, le dispositif d'affichage pour véhicule automobile comprend en outre un filtre de confidentialité disposé sur le deuxième écran de projection, de sorte que ledit filtre de confidentialité réduit un angle de vision des images réfléchies par l'élément réfléchissant.

Cette caractéristique permet de faire en sorte que l'affichage dédié au passager ne dérange pas le conducteur du véhicule.

Avantageusement, le revêtement réfléchissant s'étend sur une majeure partie de la surface de planche de bord.

Cette caractéristique permet d'obtenir une surface homogène sur la planche de bord, susceptible de réfléchir une image de grande taille ou une pluralité d'images. L'invention concerne aussi un véhicule comportant une planche de bord selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] est une vue partielle en coupe transversale d'un mode de réalisation du combiné numérique projeté de l'invention ;
[Fig. 2] montre le détail de la composition du revêtement selon l'invention ;

Naturellement, les modes de mise en œuvre du procédé de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention s'intéresse à la mise à disposition du conducteur et/ou des passagers d'informations diverses portant aussi bien sur le fonctionnement du véhicule (vitesse, régime moteur, niveau de carburant, ...) que sur des paramètres extérieurs au véhicule (température extérieure, heure, temps de trajet, cartographie, GPS, ...).

En particulier, l'invention concerne le domaine de l'affichage d'informations sur la planche de bord 1 d'un véhicule automobile au moyen d'un combiné numérique fonctionnant par projection d'images dit aussi « combiné projeté ».

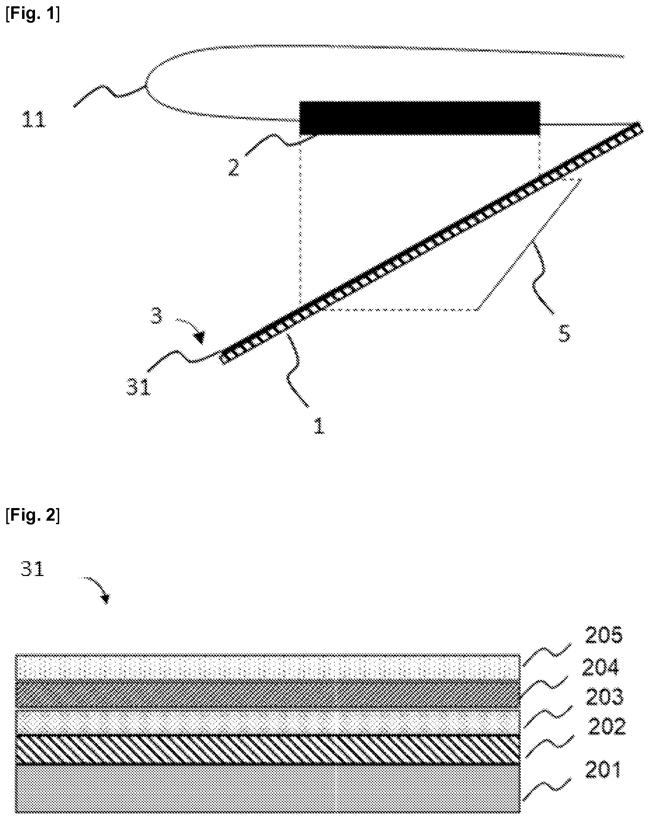

Plus précisément, ce dispositif comprend, de manière traditionnelle et comme illustré par la figure 1, un écran 2 à cristaux liquides monté sous une voûte 11 (aussi appelée coiffe de planche de bord) solidaire de la planche de bord 1. L'écran 2 est couplé à un processeur graphique (non représenté) et est destiné à projeter les images émises par le processeur sur un élément 3 en vis-à-vis assurant la réflexion de ces images dans le champ de vision du conducteur et/ou des passagers, de façon à former une image virtuelle 5.

Pour des raisons pratiques, l'écran de projection 2 est monté sensiblement horizontalement sur la planche de bord 1 du véhicule au-dessus et à distance de l'élément réfléchissant 3. Cette distance est par exemple comprise entre 10cm et 15 cm.

L'élément réfléchissant 3 assure alternativement la réflexion des images projetées par l'écran 2 lors du fonctionnement du combiné et la vision des motifs du décor superficiel de la planche de bord 1 après extinction du combiné et de l'écran de projection 2. Ces motifs peuvent tout aussi bien être formés en reliefs ou seulement en surface.

L'élément réfléchissant 3 comprend un revêtement 31 de la planche de bord 1. La figure 2 montre le détail de la composition du revêtement 31, selon l'invention..Selon l'invention l'élément réfléchissant 3 comporte les couches suivantes :
- Une couche de support 201, qui apporte de la rigidité à l'ensemble du revêtement,
- Une couche de matière 202, qui peut être du bois ou du tissus ou tout autre matériau
- Une couche de vernis 203 pour protéger la couche de matière 202, le vernis est transparent de façon à laisser apparaitre la matière.

Selon un mode de réalisation de l'invention, la couche de support 201, la couche de matière 202 et la couche de vernis 203 sont comprises dans un matériau de type RIM (acronyme de l'expression anglosaxonne Reaction In Mold).

La planche de bord comporte en outre une couche semi transparente 204 destinée à d'une part réfléchir l'image émise par le ou les écrans lorsque celui-ci diffuse des images. La couche semi-transparente laisse apparaitre la couche de matière 202 lorsque l'écran est éteint et ne diffuse pas matière.

La couche semi-transparente est obtenue par flashage de chrome sur la couche de vernis 203.

La planche de bord comporte en outre une couche vernis transparent anti-trace de doigt 205 destinée à éviter les traces de doigts sur la planche de bord.

Selon une mode de réalisation de l'invention, le dispositif d'affichage comprend un deuxième écran. Ce deuxième un deuxième écran de projection est monté sur la planche de bord 1 du véhicule, en vis à vis de l'élément réfléchissant 3. Le au moins un écran 2 de projection est monté en vis-à-vis d'une première partie de planche de bord, par exemple du côté du conducteur (il fait alors office de combiné d'instrumentation). Le deuxième écran de projection est monté en vis-à-vis d'une deuxième partie de planche de bord distincte de la première partie de planche de bord, par exemple du coté du passager, pour être utilisé comme écran d'info-divertissement.

Optionnellement, l'un des écrans (celui côté passager) comporte un filtre de confidentialité de sorte que le reflet des images diffusées par l'écran est visible du passager mais pas du conducteur. En effet, ledit filtre de confidentialité réduit un angle de vision des images réfléchies par l'élément réfléchissant. Les images réfléchies par le revêtement sont alors visibles uniquement par la personne située en face de la partie réfléchissante en vis-à-vis du deuxième écran.

Le filtre de confidentialité est un filtre de confidentialité selon l'art connu. Celui-ci peut comprendre un filtre polarisé avec un matériau qui ne laisse passer la lumière que dans une gamme limitée de directions, limitant ainsi la visibilité des informations affichées sur l'affichage privé à un angle visible limité.

Selon un autre mode de réalisation, le dispositif d'affichage comprend un troisième écran disposé en vis-à-vis deuxième partie de planche de bord distincte de la première et de la deuxième partie de planche de bord, par exemple en partie centrale.

Ainsi, lorsque les trois écrans projettent des images, les images réfléchies recouvrent la majeure partie de la planche de bord.

## Revendications

1. Dispositif d'affichage pour véhicule automobile comprenant un processeur graphique couplé à au moins un écran (2) de projection, monté sur la planche de bord (1) du véhicule, en vis à vis d'un élément réfléchissant (3), ledit élément réfléchissant (3) comprend un revêtement (31) de la planche de bord (1), ledit revêtement (31) comportant :
- Une couche de support (201),
- Une couche de matière (202),
- Une couche de vernis (203) pour protéger la couche de matière (202), le vernis étant transparent de façon à laisser apparaitre la couche de matière (202), et
**caractérisé en ce que**
- La planche de bord comporte en outre une couche semi transparente (204) destinée à, d'une part, réfléchir l'image émise par le au moins un écran (2) et, d'autre part, laisser apparaitre la couche de matière (202), la couche semi-transparente (204) est obtenue par flashage de chrome.

2. Dispositif d'affichage pour véhicule automobile dans lequel ledit revêtement comporte en outre une couche vernis transparent anti-trace de doigt (205) destinée à éviter les traces de doigts sur la planche de bord.

3. Dispositif d'affichage pour véhicule automobile comprenant en outre un deuxième écran de projection monté sur la planche de bord (1) du véhicule, en vis à vis de l'élément réfléchissant (3), le au moins un écran (2) de projection étant monté en vis-à-vis d'une première partie de planche de bord, le deuxième écran de projection étant monté en vis-à-vis d'une deuxième partie de planche de bord distincte de la première partie de planche de bord.

4. Dispositif d'affichage pour véhicule automobile comprenant en outre un filtre de confidentialité disposé sur le deuxième écran de projection, de sorte que ledit filtre de confidentialité réduit un angle de vision des images réfléchies par l'élément réfléchissant (3).

5. Dispositif d'affichage pour véhicule automobile dans lequel le revêtement réfléchissant (3) s'étend sur une majeure partie de la surface de planche de bord (1).

6. Véhicule comportant une planche de bord selon l'une des revendications précédentes.

## Patentansprüche

1. Eine Anzeigevorrichtung für ein Kraftfahrzeug, bestehend aus einem Grafikprozessor, der mit mindestens einem Projektionsbildschirm (2) verbunden ist, der auf dem Armaturenbrett (1) des Fahrzeugs gegenüber einem reflektierenden Element (3) angebracht ist, wobei das reflektierende Element (3) eine Beschichtung (31) des Armaturenbretts (1) umfasst, die wiederum Folgendes umfasst:
- eine Trägerschicht (201),
- eine Materialschicht (202),
- eine Lackschicht (203) zum Schutz der Materialschicht (202), wobei der Lack transparent ist, sodass die Materialschicht (202) durchscheint, und
**dadurch gekennzeichnet ist, dass**
- das Armaturenbrett ferner eine halbtransparente Schicht (204) umfasst, die einerseits dazu dient, das vom mindestens einen Bildschirm (2) emittierte Bild zu reflektieren und andererseits die Materialschicht (202) durchscheinen zu lassen; die halbtransparente Schicht (204) wird durch Verchromen hergestellt.

2. Anzeigevorrichtung für Kraftfahrzeuge, bei der die Beschichtung ferner eine transparente Anti-Fingerprint-Lackschicht (205) umfasst, die dazu bestimmt ist, Fingerabdrücke auf dem Armaturenbrett zu verhindern.

3. Anzeigevorrichtung für Kraftfahrzeuge, ferner umfassend einen zweiten Projektionsbildschirm, der auf dem Armaturenbrett (1) des Fahrzeugs gegenüber dem reflektierenden Element (3) angebracht ist, wobei mindestens ein Projektionsbildschirm (2) gegenüber einem ersten Teil des Armaturenbretts angebracht ist und der zweite Projektionsbildschirm gegenüber einem zweiten Teil des Armaturenbretts angebracht ist, der vom ersten Teil des Armaturenbretts getrennt ist.

4. Anzeigevorrichtung für Kraftfahrzeuge, ferner umfassend einen Sichtschutzfilter auf der zweiten Projektionsfläche, der den Betrachtungswinkel der vom reflektierenden Element (3) reflektierten Bilder verringert.

5. Anzeigevorrichtung für Kraftfahrzeuge, bei der sich die reflektierende Beschichtung (3) über einen großen Teil der Armaturenbrettoberfläche (1) erstreckt.

6. Fahrzeug mit einem Armaturenbrett nach einem der vorhergehenden Ansprüche.

## Claims

1. A display device for a motor vehicle comprising a graphics processor coupled to at least one projection screen (2), mounted on the dashboard (1) of the vehicle, opposite a reflective element (3), said reflective element (3) comprising a coating (31) of the dashboard (1), said coating (31) comprising:
- A support layer (201),
- A material layer (202),
- A varnish layer (203) to protect the material layer (202), the varnish being transparent so as to allow the material layer (202) to show through, and
**characterized in that**
- The dashboard further comprises a semi-transparent layer (204) intended to, on the one hand, reflect the image emitted by the at least one screen (2) and, on the other hand, allow the material layer (202) to show through, the semi-transparent layer (204) is obtained by chrome flashing.

2. Display device for motor vehicle in which said coating further comprises a transparent anti-fingerprint varnish layer (205) intended to prevent fingerprints on the dashboard.

3. Display device for motor vehicle further comprising a second projection screen mounted on the dashboard (1) of the vehicle, opposite the reflective element (3), at least one projection screen (2) being mounted opposite a first part of the dashboard, the second projection screen being mounted opposite a second part of the dashboard separate from the first part of the dashboard.

4. Motor vehicle display device further comprising a privacy filter disposed on the second projection screen, such that said privacy filter reduces a viewing angle of the images reflected by the reflective element (3).

5. Display device for motor vehicle in which the reflective coating (3) extends over a major part of the dashboard surface (1).

6. Vehicle comprising a dashboard according to one of the preceding claims.
